# EUROPÄISCHE PATENTSCHRIFT

(11) **EP 2 481 564 B1**
(45) Veröffentlichungstag und Bekanntmachung des Hinweises auf die Patenterteilung: **20.05.2015**
(21) Anmeldenummer: 12151490.5
(22) Anmeldetag: 18.01.2012
(51) Int. Cl.: B31B 19/98, B65G 43/10

(54) **Verfahren zur Herstellung von Säcken, bei welchem Stapel von Säcken oder Sackhalbzeugen von einer ersten Maschine zu einer zweiten Maschine transportiert werden, sowie System, das eine erste Maschine und eine Transport- und Speichervorrichtung enthält**
Method for producing sacks in which stacks of sacks or semi-finished sack products are transported from one machine to a second machine and system containing an initial machine and the transport and storage device
Procédé de fabrication de sacs où une pile de sacs ou de produits semi-finis de sacs sont transportés d'une première machine vers une seconde machine, ainsi que système, lequel comprend une première machine et un dispositif de transport et de stockage

(30) Priorität: 31.01.2011 DE 102011003379
(43) Veröffentlichungstag der Anmeldung: 01.08.2012
(73) Patentinhaber: Windmöller & Hölscher KG, 49525 Lengerich/Westf. (DE)
(72) Erfinder: Dieckmann, Franz-Josef, 49497 Mettingen (DE); Schrödter, Andreas, 49549 Ladbergen (DE); Hawighorst, Thomas, 49205 Hasbergen (DE)

(56) Entgegenhaltungen:
- DE-B- 1 298 873

## Beschreibung

Die Erfindung betrifft ein Verfahren nach Anspruch 1 und ein System nach Anspruch 13.

Zur Herstellung von Säcken oder Beuteln werden oft mehrere Maschinen eingesetzt.

Zunächst werden in der Regel Schlauchstücke aus einer oder mehreren flachen Materialbahnen, meist Papier- und/oder Kunststoffbahnen von Schlauchmaschinen hergestellt, indem diese Bahnen zunächst zu einem Schlauch zusammengelegt werden, wobei die sich überlappenden Randbereiche miteinander mit Klebstoff verklebt werden. Anschließend wird der Schlauch in Schlauchstücke vereinzelt. Die Maschine zum Bilden der Schlauchstücke wird als Schlauchmaschine bezeichnet. Eine solche Schlauchmaschine ist in der Druckschrift DE 197 04 332 A1 offenbart. Schlauchmaschinen werden für die Zwecke der vorliegenden Druckschrift als Maschinen bezeichnet, da Arbeitsschritte an den Säcken, Sackhalbzeugen oder Teilmengen dieser Gegenstände durchgeführt werden, die für die spätere Nutzung dieser Gegenstände - zu der auch der Transport der Säcke außerhalb des Systems zählt - notwendig sind.

Eine weitere Maschine ist eine so genannte Bodenlegemaschine. In ihr werden an einem oder an beiden offenen Enden dieser Schlauchstücke Böden geformt, indem die Enden unter Ausbildung von Bodenrechtecken und Dreieckstaschen aufgezogen werden. Teile der Bodenrechtecke werden anschließend, zum Teil nach Einbringung eines Ventilzettels, zurückgefaltet und mit Klebstoff verklebt. Auf diese Weise entsteht ein befüllbarer Sack. An geeigneten Stellen in dieser Maschine können zusätzlich noch Innenriegel und/oder Bodendeckblätter aufgeklebt werden. Schließlich werden die Säcke zu Sackstapeln angeordnet. Wichtige Funktionen von Bodenlegemaschinen sind den Druckschriften DE 195 40 148 A1, DE 195 40 150 A1, DE 196 21 586 A1, DE 103 09 893 A1, D1 103 27 646 A1, EP 1 892 086 A1 und DE 103 30 750 A1 zu entnehmen.

In einer weiteren Maschine, der Palettiermaschine, können die Sackstapel auf Paletten angeordnet werden, so dass eine große Anzahl an Säcken auf einfache Weise abtransportiert werden kann. Die Druckschriften DE 100 22 272, DE 103 09 131 und DE 10 2005 049 964 A1 zeigen solche Palettiermaschinen. Auch die Palettierung der Sackstapel gehört zu den Arbeitsschritten, die zu der Nutzung der Säcke außerhalb des Produktionssystems notwendig sind beziehungsweise, die die Art und Effizienz ihrer Nutzung bestimmen.
Das liegt unter anderem an dem hohen Anteil, den Transportkosten bei dem Produkt "Säcke" haben können. Daher ist eine Platz sparende und sichere Palettierung notwendig.

Weitere Maschinen können im Produktionsprozess integriert sein.

Im Rahmen dieser Patentanmeldung sind unter Maschinen alle Maschinen zu verstehen, die Material, also beispielsweise Materialbahnen, Schlauchstücke oder fertige Säcke ver- oder bearbeiten, behandeln, anordnen oder andere Veränderungen an ihnen vornehmen. Den Maschinen sind Steuerkomponenten zugeordnet, welche die für den Betrieb der Maschine notwendigen Funktionen und Aggregate steuern. Solche Steuerkomponenten können Hardware-Elemente, wie etwa eine SPS (speicherprogrammierbare Steuerungseinheit) oder ein IPC (Industrie-PC) sein. Auch Software-Code kann Bestandteil der Steuerkomponenten sein. Die Steuerung kann dabei auf der Basis der vom Bedienpersonal vorgegebenen Anforderungen erfolgen. So kann das Bedienpersonal beispielsweise die Fertigungsgeschwindigkeit vorgeben.

Zwischen diesen Maschinen werden oft Speicher und Transportvorrichtungen eingesetzt, die eine Mehrzahl von Bändern aufweisen.
Zwischen den einzelnen Maschinen kann jeweils zumindest eine Transport-oder Lagervorrichtung vorgesehen sein, die die Maschinen miteinander verbindet. Das bedeutet, dass die Werkstücke, also die Schlauchstücke oder Säcke, mit diesen Transport- und/oder Lagervorrichtungen zwischen den Maschinen transportiert werden können, wobei diese Vorrichtungen eine gewisse Menge an Werkstücken (Speichervolumen) aufnehmen können. Jedes Werkstück beziehungsweise Sackhalbzeug, das durch eine Transport- und/oder Lagervorrichtung von einer Maschine übernommen wird, wird also nicht sofort von der im Produktionsfluss folgenden Maschine weiterverarbeitet. Vielmehr verweilt das Werkstück in dieser Vorrichtung. Dadurch wird das ausreichende Abtrocknen der Klebstoffe ermöglicht. Außerdem wird ein Puffer für den Fall geschaffen, dass eine der Maschinen nicht mit ausreichender Leistungsfähigkeit arbeiten kann. Die Transport- und/oder Lagervorrichtungen stellen somit einen Speicher dar. In den Transport- und Lagervorrichtungen werden in der Regel keine Veränderungen an den Werkstücken vorgenommen. Es kommt in den Lager- und Transportvorrichtungen lediglich zu einer Ortsveränderung, die bei der Nutzung des späteren Produkts keine Rolle spielt. Oft werden die Werkstücke in den Lager- und Transportvorrichtungen auch gewendet, gedreht und gepresst werden.
Die Werkstücke können einzeln, vorzugsweise aber in Stapeln, transportiert oder gelagert werden. Diese Stapel sind eine Form von Teilmengen der vorgenannten Säcke oder Sackhalbzeuge.
Eine solche Transport- und/oder Lagereinrichtung ist in der WO 2005/018923 A1 sowie der DE 12 98 873 B offenbart.
Lager- und Transportvorrichtungen werden in den gattungsgemäßen Verfahren und Systemen auch lediglich zum Lagern verwendet. In diesem Falle sind sie einer Maschine nachgeschaltet, stellen jedoch keine direkte Verbindung zu einer weiteren Maschine her. Das einfachste System im Sinne der vorliegenden Druckschrift besteht demnach aus einer Maschine und einer Lager- und Transportvorrichtung.
Diese Lager- und Transportvorrichtungen transportieren die Säcke oder Sackhalbzeuge. Die Lager- und Transportvorrichtungen enthalten Förderbänder. Zu den wichtigen Arbeitsschritten, die in Lager- und Transportvorrichtungen vorgenommen werden können, gehört das Wenden der Säcke, Sackhalbzeuge oder der Sackstapel. Dies ist notwendig, um bei verschiedenen Aufträgen eine unterschiedliche Ausrichtung der Sackventile zu den Sacknähten (ursprünglich Naht des in der Schlauchmaschine gefertigten Schlauchs) herbeizuführen. Oft spielt auch eine unterschiedliche Ausrichtung des Ventils zu dem Druckbild, mit dem die Sackwandungen oft versehen werden, ebenfalls eine Rolle.

Nach dem Stand der Technik werden eigentlich ausschließlich Stapel von Säcken oder Sackhalbzeugen von den Speicher- und Transportvorrichtungen transportiert. Das erste Band dieser Vorrichtungen wird als Sammelband eingesetzt. Das bedeutet, dass diesem ersten Band sukzessive Stapel von Säcken oder Sackhalbzeugen übergeben werden. Zu diesem Zweck wird das Band intermittierend oder schrittweise bewegt. Die jeweilige Schrittlänge reicht zur Aufnahme eines Stapels. Nach einer bestimmten Anzahl N von Schritten und Übergabevorgängen ist das Band mit Stapeln von Säcken oder Sackhalbzeugen gefüllt.

Bänder, die in der geschilderten Weise eine gewisse Anzahl von Stapeln sammeln, werden daher Sammelbänder genannt. Das schlussendlich gefüllte erste Band der Speichervorrichtung übergibt die bestimmte Anzahl N an Stapeln dann en bloc an das nachfolgende Band, indem das erste Band eine Förderbewegung ausführt, die zur Aufnahme der Anzahl N der Stapel geeignet ist. Diese Förderbewegung entspricht im Wesentlichen der Ausdehnung des Bandes in der Förderrichtung. Zur Aufnahme und Speicherung dieser Anzahl von Stapeln führt das zweite Band (das in der Sprache des Fachmannes hier ein Speicher- und Transportband ist) eine gleich oder ähnlich lange Bewegung aus. Ist das dritte Band (ebenfalls ein Speicher und Transportband) leer, so fördert das zweite Band seine ganze Ladung unmittelbar an das dritte Band weiter, indem es statt der vorgenannten gleich langen Bewegung (gleich lang wie die Bewegung des ersten Bandes) eine in etwa doppelt so lange Bewegung ausführt. Bei Verfahren des Standes der Technik setzt sich diese Art der Weitergabe der Stapel fort, bis entweder ein volles Speicher- und Transportband erreicht ist, oder bis das Abgabeband erreicht ist. Dieses Abgabeband bekommt im Normalbetrieb auch wieder die ganze Anzahl von Stapeln N im Rahmen einer En-bloc-Übergabe. Das Abgabeband gibt diese Stapel dann sukzessive an die zweite Maschine ab, indem es sich intermittierend mit Schrittlängen, die auf die Stapelausdehnung in der Transportrichtung abgestimmt sind, bewegt. Das Abgabeband arbeitet also weitgehend spiegelbildlich zu dem Sammelband.

Zusammenfassend ist also zu sagen, dass Speicher- und Transportvorrichtungen des Standes der Technik über Sammelbänder, Speicher- und Transportbänder sowie Abgabebänder verfügen. Die Sammelbänder sind die ersten Bänder der Speicher- und Transportvorrichtungen, die Abgabebänder die letzten. Zwischen den vorgenannten Bändern ist eine Anzahl von Speicher- und Transportbändern angeordnet. In einigen Fällen sind solchen Speicher- und Transportbändern auch Zusatzvorrichtungen wie eine Pressplatte zugeordnet, mit der die auf dem Band befindlichen Stapel gepresst werden.
Nach dem Stand der Technik gibt es Speicher- und Transportvorrichtungen der vorgenannten Art zwischen Schlauchmaschine und Bodenlegemaschine sowie zwischen Bodenlegemaschine und Palettiermaschinen.

Verfahren und Systeme zur Herstellung von Säcken sind teuer. Daher ist es ein ständiges Bestreben des Fachmannes, an dieser Stelle die Effizienz zu erhöhen. Es hat sich gezeigt, dass geplante und ungeplante Maschinenstillstände, Auftragswechsel und Wechsel in der Geschwindigkeit einzelner Maschinen die Effizienz der gesamten Sackherstellung über Gebühr belasten.
Daher besteht die Aufgabe der vorliegenden Erfindung darin, die Effizienz dieser Verfahren und Systeme zu steigern und den vorgenannten Problemen abzuhelfen.

Diese Aufgabe wird durch die Ansprüche 1 und 13 gelöst.
Wenn das erste Band, das der Maschine folgt, die der Speicher- und Transportvorrichtung in der Transportrichtung der Säcke vorgelagert ist, kein reines Sammelband ist, ergeben sich eine Reihe von Vorteilen, die die Effizienz des Verfahrens oder Systems steigern.
Oft wird dann zumindest ein anderes Band der Speicher- und Transportvorrichtung als Sammelband Verwendung finden. Zu diesem Zweck sammelt dann dieses eine Band zumindest zwei Stapel, bevor es diese abgibt. Die Stapel werden dann wieder durch einen intermittierenden Betrieb gesammelt. Die jeweilige Schrittlänge der Bewegung kann wiederum der Länge der Stapel angepasst sein, es können jedoch - insbesondere wenn keine Anzahl N von Stapeln, die das Band füllen können, mehr zu erwarten ist - auch andere Schrittlängen vorkommen.
Unbeschadet der vorgenannten Überlegungen können weitere Bänder der Transportvorrichtung in der traditionellen Weise als Speicher- und Transportband eingesetzt werden.
Es ist von Vorteil, wenn das letzte Band der Speicher- und Transportvorrichtung eben auch als Sammelband verwendet wird.
Ein einfaches Beispiel kann die Effizienzsteigerung in einem Spezialfall belegen:
Das System besteht aus einer Schlauchmaschine (hier erste Maschine) und einer Bodenlegemaschine (hier zweite Maschine) und einer zwischengeschalteten Speicher- und Transportvorrichtung, die bei Produktionsbeginn völlig leer ist. Nun ist es effizienzsteigernd, wenn der erste von der Schlauchmaschine hergestellte Schlauchstückstapel sogleich durch die gesamte Speicher- und Transportvorrichtung durchgereicht und an die Bodenlegemaschine weiter gereicht wird. Im weiteren Verlauf der Produktion kann die Schlauchmaschine oft Geschwindigkeitsvorteile gegenüber der Bodenlegevorrichtung verbuchen, so dass das letzte Band der Speicher- und Transportvorrichtung Schlauchstückstapel sammelt. Die Sammelbewegung kann vorteilhafterweise auch gleichzeitig die Abgabebewegung sein.

Bei den erfindungsgemäßen Verfahren oder Systemen kann die Speicherbelegung durch flexible Streckenbeträge, um die Bänder bewegt werden und die beide Vorzeichen haben können, verbessert werden.

Oft werden Kundenaufträge an Säcken gefertigt. Die Säcke dieser Aufträge können sich unterscheiden oder nicht (genauer die Ausführung der Säcke kann sich unterscheiden oder nicht). In beiden Fällen besteht ein Bedarf zu erkennen, wann bzw. wo der eine Auftrag fertig ist und wann bzw. wo der andere beginnt. Auch innerhalb eines Auftrages können Lücken, die u. a. durch Produktionsunregelmäßigkeiten oder Ausschleusung entstehen können, durch flexible Förderstrecken geschlossen werden. Vorteilhaft ist das Schließen von Lücken auch zwischen unterschiedlichen Aufträgen. Hierzu sollte die Grenze zwischen den Aufträgen oder gar die Position einzelner Sack- oder Schlauchstückstapel im System bekannt sein. Weiter unten werden Verfahren zur Verfolgung von Teilmengen an Säcken und Sackhalbzeugen, zu denen die vorgenannten Stapel zählen, vorgestellt. Es ist vorteilhaft, die vorgenannten Grenzen und oder Positionen von Teilmengen an Säcken (65) und Sackhalbzeugen (23,25) - zu denen Stapel gehören - dem Maschinenbediener anzuzeigen.
Es ist vorteilhaft, wenn die Steuervorrichtung, die einem System zugeordnet ist, dazu programmiert ist verschiedene Betriebsmodi durchzuführen. Zu diesen kann ein möglichst schneller Produktionsstart mit möglichst schnellem Durchreichen von Stapeln von Maschine zu Maschine zählen. Ein weiterer Modus kann ein Normalbetrieb, der dem oben beschriebenen Verfahren nach dem Stand der Technik gleichkommt, sein.

Die vorstehend beschriebenen Maschinen und Lager- und Transportvorrichtungen, die einem System zugeordnet sind, werden nachstehend gemeinsam Bestandteile eines Systems genannt.

Um - wie oben angedeutet - Teilmengen an Säcken oder Sackhalbzeugen, zu denen Stapel gehören, oder Produktgrenzen bei ihrem Weg durch das System zu verfolgen, ist zusätzlich vorteilhaft:
- dass zumindest einer Teilmenge der Säcke oder Sackhalbzeuge, die das System bearbeitet, von einer Steuervorrichtung Daten zugeordnet werden,
- dass im Rahmen einer ersten Lokalisierung der Aufenthaltsort der zumindest einen Teilmenge, der Daten zugeordnet sind, zumindest zu einem ersten Zeitpunkt ermittelt wird,
- und dass die Steuervorrichtung im Rahmen zumindest einer zweiten Lokalisierung aufgrund der ersten Lokalisierung und weiterer Produktionsdaten den Aufenthaltsort dieser Teilmenge zu einem zweiten Zeitpunkt ermittelt.

Zu dem ersten vorstehenden Spiegelstrich ist zu sagen, dass eine Teilmenge der Säcke oder Sackhalbzeuge natürlich aus einem oder mehreren dieser Gegenstände bestehen kann. Oft wird die Teilmenge als Stapel dieser Gegenstände vorliegen. Dieser Teilmenge sollen Daten zugeordnet werden. Diese Daten können ein Bit umfassen (z. B. "Teilmenge ist da oder nicht da") oder sie können einen Datensatz bilden, der Daten über die Teilmengen enthält und diese Teilmenge damit auch mehr oder weniger vollständig charakterisiert.

Der zweite Spiegelstrich befasst sich mit einer ersten Lokalisierung der Teilmenge im System. Diese besteht darin, dass der Aufenthaltsort der Teilmenge im System, der Daten zugeordnet sind, zu zumindest einem Zeitpunkt festgestellt wird. Dies kann dadurch geschehen, dass ein Signal ausgegeben wird, wenn eine Teilmenge - wie die erste oder letzte Teilmenge eines Auftrages - einen bestimmten Punkt im System passiert. Dieser Punkt kann die Übergabestelle zwischen einer Maschine und einer Lagertransportvorrichtung sein, er kann aber auch die Querschneidevorrichtung der Schlauchmaschine oder Sensoreinheit sein, die unter anderem in einer Lager- oder Transportvorrichtung arbeitet. In diesem Zusammenhang kommen unter anderem optische, mechanische oder auf Ultraschallbasis arbeitende Sensoren in Frage.

Der dritte Spiegelstrich befasst sich mit zumindest einer zweiten Lokalisierung, die darin besteht, dass aufgrund der ersten Lokalisierung und weiterer Produktionsdaten der Aufenthaltsort der zumindest einen Teilmenge zu einem zweiten Zeitpunkt ermittelt wird. Zu diesen weiteren Produktionsdaten kann die Produktionsgeschwindigkeit (Geschwindigkeit von Teilmengen im System) gehören. In der Regel gehört zu der Geschwindigkeit dann auch der Ort zumindest einer Lokalisierung und der Zeitpunkt, zu dem sie stattfand. Insbesondere die Geschwindigkeit kann durch andere Größen wie Anzahl der Teilmengen zwischen zwei Lokalisierungen und/oder durch Sensorsignale ersetzt werden.

So kann bei einer einfachen Ausführungsform der Erfindung wie erwähnt eine erste Lokalisierung vorgenommen werden, indem ein Ein-Bit-Signal ausgegeben wird, wenn eine bestimmte Teilmenge einen bestimmten Punkt im System passiert. Die weiterhin nötigen Produktionsdaten können in der Maschinengeschwindigkeit bestehen. Aufgrund dieser Maschinengeschwindigkeit kann die Steuereinheit errechnen, wann die Teilmenge bestimmte andere Punkte in dem System - wie bestimmte Bearbeitungsstationen - erreicht. Bei diesem Beispiel ist der Abstand zwischen den Lokalisierungen wichtig.

Alternativ oder ergänzend können die Signale von Sensoren und/oder Aktoren als Produktionsdaten ausgewertet werden, um den Aufenthaltsort einer Teilmenge, an der eine erste Lokalisierung vorgenommen wurde, zu bestimmen. So kann die Steuervorrichtung aufgrund der Kenntnis der Zahl O an Teilmengen, die zwischen den Orten der ersten und zweiten Lokalisierung liegt, den Zeitpunkt der zweiten Lokalisierung bestimmen. Beispiel: Zwischen diesen beiden Orten befinden sich fünf Teilmengen, jede Teilmenge löst bei ihrer Passage ein Signal aus, beim sechsten Signal nach der ersten Lokalisierung ist die betreffende Teilmenge, die bereits einer ersten Lokalisierung unterzogen wurde, am Ort der zweiten Lokalisierung angekommen.

Aufgrund der vorangegangenen Lokalisierungen und von Produktionsdaten können auch weitere Lokalisierungen aufgrund der ersten Lokalisierung oder allgemeiner aufgrund einer vorangegangenen Lokalisierung und weiterer Produktionsdaten vorgenommen werden. Auch die weiteren Lokalisierungen werden ebenfalls als zweite Lokalisierung bezeichnet werden.

Ganz allgemein könnte man sagen, dass eine mte Lokalisierung aufgrund der Daten einer nten Lokalisierung und der weiteren Produktionsdaten vorgenommen werden kann, wobei n kleiner ist als m.

Es sind einfache Verfahren beziehungsweise Systeme denkbar, bei denen lediglich eine Maschine und eine Lager- und Transportvorrichtung zum Einsatz kommt und bei der der Effizienzgewinn dadurch erzielt wird, dass aufgrund einer zweiten Lokalisierung in der Lager- und Transportvorrichtung klar ist, an welcher Stelle Teilmengen des alten und des neuen Auftrages verortet sind, so dass diese ohne Zeitverlust in korrekter Form ihrer weiteren Verwertung zugeführt werden können. Insbesondere, wenn die Teilmengen in der Transport- und Lagervorrichtung ihre Reihenfolge beibehalten, ist es hier bereits sehr hilfreich, wenn die Auftrags- oder Produktgrenze durch die zweite Lokalisierung klar zu bestimmen ist. Dies kann schon der Fall sein, wenn entweder die letzte Teilmenge des alten Auftrages oder die erste Teilemenge des neuen Auftrages lokalisiert ist.

Bei vielen Systemen ist es vorteilhaft, wenn die erste Lokalisierung direkt in dem ersten Systembestandteil erfolgt. Dann kann beispielsweise in dem zweiten Systembestandteil eine zweite Lokalisierung vorgenommen werden. Zu den passenden Orten für Lokalisierungen zählen Ausscheideweichen. Oft sind dieser in der Transportrichtung der Säcke und Sackhalbzeuge den Maschinen oder bestimmten Bearbeitungsstationen nachgelagert, wobei eine solche nachgelagerte Ausscheideweiche auch baulich zu der betreffenden Maschine gehören kann. Oft werden die ersten Teilmengen, die diese Ausscheideweichen passieren, ausgesondert also an der Weiche ausgeschleust, da sie mit Qualitätsmängeln durch die noch nicht abgeschlossene Einstellung und/oder den Produktionsanlauf behaftet sind. Die erste Teilmenge der Gutproduktion, die in dem System verbleibt und zumindest an dieser Stelle nicht ausgeschleust wird, kann dann vorteilhafterweise lokalisiert werden.

Wie erwähnt können die Daten, die der zumindest einen Teilmenge zugeordnet werden, ganze Datensätze umfassen, die zumindest einen Teil der Produktionsparameter beziehungsweise Eigenschaften der Teilmengen charakterisieren. An dieser Stelle seien beispielhaft lediglich der Bodenmittenabstand und die Lage des Ventils relativ zu der Schlauchnaht erwähnt. Aufgrund der Wichtigkeit dieser Eigenschaft kann die Frage, ob eine Teilmenge in einer Lager- und Transportvorrichtung schon einmal gewendet und/oder gedreht wurde, sehr wichtig sein, so dass auch diese Eigenschaft einer Teilmenge (gewendet ja/nein, wie gewendet) vorteilhafterweise in einen Datensatz aufgenommen werden kann.

In fortgeschrittenen Verfahren dieser Art können solche Datensätze während des Durchlaufs der Teilmengen durch das System zumindest ergänzt werden. Hierbei können Änderungen in dem Bearbeitungszustand der jeweiligen Teilmenge, Produktionsfehler oder sonstige Daten zu ihrer Beschaffenheit nachgetragen werden.
Vorteilhaft ist es auch, wenn zwei oder mehr Teilmengen pro Auftrag zumindest zweimal lokalisiert werden. Aufgrund dieser zumindest zweimaligen Lokalisierung einer geschlossenen Abfolge von Teilmengen ist es möglich, alle Teilmengen dieser Abfolge zu verorten. Allen diesen Teilmengen können dann gegebenenfalls Daten und auch weitere Produktionsdaten zugeordnet werden.

Insbesondere, wenn eine geschlossene Abfolge von Teilmengen zumindest zweimal lokalisiert wird, ist es vorteilhaft, wenn die (vorzeitige) Ausschleusung von Teilmengen bei der Verfolgung des Weges der Teilmengen durch das System berücksichtigt wird. Dies kann u. a. durch Sensoren an Ausscheideweichen oder durch die Aufzeichnung der Steuersignale, welche an die Auscheideweiche gehen, geschehen.
Vorteilhaft ist es, wenn aufgrund der Daten verschiedene Funktionskomponenten des Systems von einem ersten in ein zweites Format umgestellt werden. Dies können vor allem die Funktionskomponenten der zweiten und dritten Maschine eines Systems sein.

Insbesondere bei Funktionskomponenten der Bodenlegemaschine kann es vorteilhaft sein, wenn diese sukzessive umgestellt werden. In sehr fortgeschrittenen Ausführungsformen der Erfindung kann auf diese Weise die Umstellung dazu geeigneter Funktionskomponenten innerhalb des Systems der Produkt- oder Auftragsgrenze voraneilen.

Besonders vorteilhaft ist es, wenn bei einem System mehrere Maschinen gleichzeitig unterschiedliche Aufträge ausführen. Sind diese beiden Maschinen durch eine Transport- und Lagereinheit miteinander verbunden, so kann sie Teilmengen des neuen Auftrages aufnehmen und gleichzeitig Teilmengen des alten Auftrages abgeben. Durch die bereits geschilderten Maßnahmen kann die Steuereinheit die Produkt- bzw. Auftragsgrenze in der Speicher- und Transportvorrichtung verfolgen und/oder den Weg der einzelnen Teilmengen durch diese Vorrichtung verfolgen, wenn die betreffende Abfolge von Teilmengen vollständig lokalisiert worden ist. In letzterem Fall wäre auch eine beliebige, z. B. besonders Platz sparende Anordnung der Teilmengen in der Speicher- und Transportvorrichtung möglich, die sich nicht streng an die Fertigungsreihenfolge der Teilmengen hält.

Wenn der Bediener aufgrund der Lokalisierungen den Lauf der Produktgrenze durch das System - oder gar den Verlauf einer Mehrzahl von oder aller Teilmengen durch das System - verfolgen kann, ist dies von großem Vorteil. Zu diesem Zweck kann die Steuervorrichtung eine geeignete Anzeigeeinheit ansteuern. Der Maschinenbediener weiß dann unter anderem besser, welche zusätzlichen manuellen Maßnahmen er durchführen sollte.

Geeignete Systeme können über Steuervorrichtungen verfügen, die zur Ausführung der in dieser Druckschrift beschriebenen und beanspruchten erfindungsgemäßen Verfahren eingestellt sind. Vorteilhaft ist hierbei, wenn auch den Speicher- und Transportvorrichtungen intelligente Steuervorrichtungen zugeordnet sind. Diese können über Interfaces mit zumindest einer Steuervorrichtung des Systems vernetzt sein.

In der vorliegenden Druckschrift werden die Begriffe Säcke und Beutel synonym verwendet. Es wird jedoch eingeräumt, dass die Erfindung bei Säcken noch vorteilhafter ist als bei Beuteln.

Es ist von großem Vorteil, wenn verschiedene, oder gar alle in dieser Druckschrift vorgestellten Verfahren von der Steuereinheit des Systems automatisiert ausgeführt werden. Hierzu kann die Steuervorrichtung entsprechend eingerichtet werden. Diese Einrichtung kann durch eine Programmierung vorgenommen werden. Diese Programmierung kann auch unter Verwendung von Datenträgern oder moderner Datenübermittlungsmethoden wie E-Mail, Chatting oder Fernwartungsmethoden vorgenommen werden.

Weitere Ausführungsbeispiele der Erfindung gehen aus der gegenständlichen Beschreibung und den Ansprüchen hervor.
Die einzelnen Figuren zeigen:
- Fig. 1: Seitenansicht einer Schlauchmaschine in einem erfindungsgemäßen System
- Fig. 2: schematischen Darstellung der in einer Bodenlegemaschine ablaufenden Fertigungsschritte
- Fig. 3: schematische Darstellung einer Ablageeinrichtung
- Fig. 4: Ansicht einer Palettiermaschine
- Fig. 5: Seitenansicht einer ersten Speicher- und Transportvorrichtung
- Fig. 6: Draufsicht auf eine ersten Speicher- und Transportvorrichtung und eine Schlauchmaschine
- Fig. 7: Schematische Darstellung eines Systems zur Produktion von Säcken

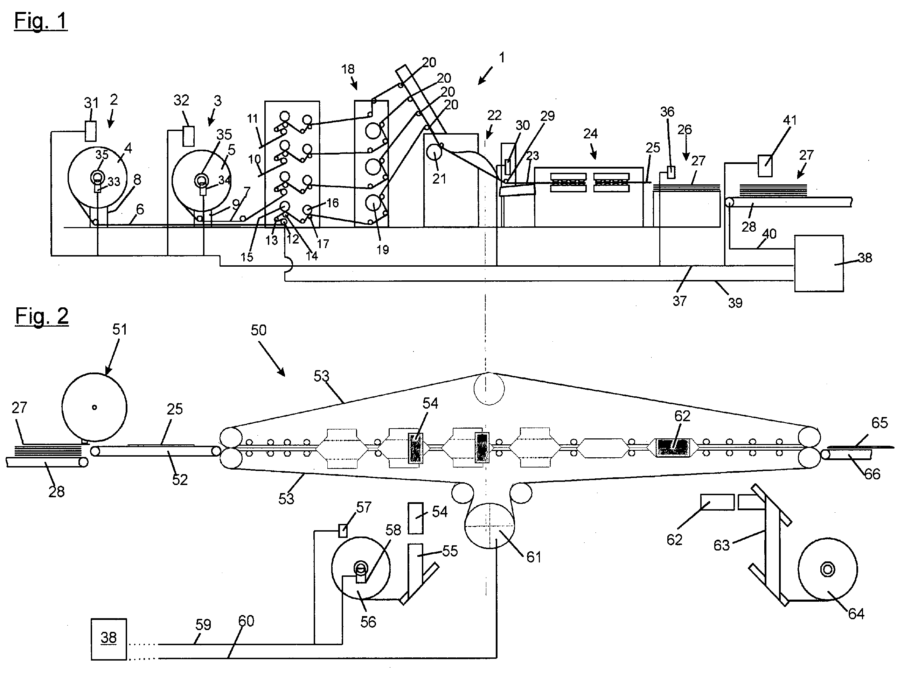

Fig. 1 zeigt eine Schlauchmaschine 1 als Bestandteil eines erfindungsgemäßen Systems. Gezeigt ist eine solche Maschine zum Herstellen eines vierlagigen Schlauches. Vier Lagen sind jedoch keine Beschränkung, es können auch Schläuche mit mehr oder mit weniger Lagen produzierbar sein. Die einzelnen Bahnen 6, 7 werden von hintereinander angeordneten und in Abwickeleinrichtungen 2, 3 gelagerten Materialrollen 4, 5 abgezogen. Es sind nur zwei Abwickeleinrichtungen dargestellt. Die Materialrollen 4, 5 sind in Gestellen 8, 9 drehbar gelagert. Die abgezogenen Bahnen 6, 7 laufen über Leitrollen zu den Vorzugseinrichtungen. Die Bahnen 6, 7, 10, 11 werden durch angetriebene Vorzugseinrichtungen vorgezogen, von denen jede aus der angetriebenen Vorzugswalze 12 und der den Umschlingungswinkel vergrößernden Leitwalze 13 besteht. Hinter den Vorzugswalzen 12, 13 ist eine die Bahn mit Nadellöchern versehende Einrichtung angeordnet, die aus einer Gegendruckwalze 14 besteht, über die die eingezogene Bahn läuft und an die eine Nadelwalze 15 anstellbar ist, die die Bahn entweder über ihre ganze Breite oder streifenmäßig mit Nadellöchern versieht, die der Entlüftung der aus den Bahnen hergestellten Säcken dienen.

Nun läuft jede Papierbahn von der Nadelwalze zu der Messerwalze 16, die an eine Gegendruckwalze 17 anstellbar ist. Die Messerwalze 16 erzeugt eine Querperforation, die die spätere Abrisslinie bildet. Die Papierbahnen laufen daran anschließend in einen Ständer 18 ein, in dem die Bahnen 6, 7 und 10 beidseits der Querperforationen durch Klebstoffauftragswalzen 19 mit quer verlaufenden Klebstoffstreifen versehen werden. Nach dem Zusammenführen der Bahnen mittels der Umlenkrollen 20 laufen diese über Klebstoffauftragswalzen 21, welche die Bahnen mit Klebestoffaufträgen in Längsrichtung versehen. Es schließt sich die Schlauchbildungsstation 22 an, welche im Wesentlichen Führungselemente wie etwa Führungsbleche umfasst, mit welchen die Außenränder der Bahnen umgeschlagen und übereinander gelegt werden. Der so gebildete Schlauch 23 läuft nun in ein Abreißwerk 24 ein, in dem der Schlauch 23 entlang der Querperforation reißt und auf diese Weise in Schlauchstücke 25 vereinzelt wird. Ein solches Abreißwerk ist beispielsweise aus der EP 0 711 724 A1 bekannt. Aus mehreren Schlauchstücken 25 werden nun in der Stapeleinrichtung 26 Schlauchstückstapel 27 gebildet, die über eine erste Transporteinrichtung 28 abgeführt werden.

Die Schlauchmaschine umfasst mehrere Walzen, die angetrieben sein können. Neben den bereits genannten Vorzugswalzen 12 können weitere Walzen als Antriebswalzen ausgebildet sein. Die Maschinen- bzw. Fertigungsgeschwindigkeit kann dabei über Drehgeber an den Antriebswalzen (nicht gezeigt) oder über Drehgeber an einer Umlenkwalze gemessen werden. Als Beispiel umfasst die Umlenkwalze 29 einen Drehgeber 30. Auch ist denkbar, die Transportgeschwindigkeit einer Bahn direkt zu messen.

Der Umfang der Materialrollen 4 und 5 kann über Sensoren 31, 32 gemessen werden. Darüber kann, bei Kenntnis des Durchmessers der Wickelhülsen 35, die Restmenge des Materials bestimmt und damit der Zeitpunkt des spätesten Rollenwechsels vorausbestimmt werden. Als Alternative bieten sich Drehgeber 33, 34 an, die die Drehgeschwindigkeiten der Materialrollen messen. Unter Berücksichtigung der Fertigungsgeschwindigkeit kann der Zeitpunkt des Rollenwechsels bestimmt werden.

Ein weiterer Sensor 36 bestimmt die Anzahl der Schlauchstücke 25 in dem Schlauchstückstapel 27. Die Daten der Sensoren und Drehgeber 30 - 34 und 36 können über eine Datenleitung 37 der Steuereinheit 38 zugänglich gemacht werden. Weitere Sensoren und/oder Messeinrichtungen an weiteren Stellen der Maschine sind denkbar, auch sie wären über die Datenleitung 37 an die Steuereinheit 38 angeschlossen. Die Steuereinheit 38 steuert nun über die Steuerleitung 39 die Antriebe an. Beispielhaft ist gezeigt, dass die Steuerleitung 39 zum Antrieb der Umlenkwalze 12 führt.

Wie bereits erwähnt können bereits in der Schlauchmaschine 1 Sensoren für die erste Lokalisierung einer Teilmenge von Sackbestandteilen angebracht sein. Alternativ oder ergänzend können natürlich auch Steuersignale herangezogen werden. An der Vereinzelung des Schlauchs zu Schlauchstücken sind vor allem die Messerwalzen 16, die die Bahnen 6 an den späteren Abreißstellen perforiert bzw. schwächt und das Abreißwerk 24 beteiligt. Sensor oder Steuersignale zu einer Lokalisierung können unter anderem an den Messerwalzen oder Abreißstationen gewonnen werden. Soweit die Schlauchmaschine über eine eigene Steuervorrichtung verfügt, kann diese die Daten zu einer Lokalisierung aufnehmen und bei der Übergabe der jeweiligen Teilmenge von Schlauchstücken an den nächsten Bestandteil des Systems an eine weitere Steuervorrichtung des Systems weitergeben oder weiter selber verwerten, wenn sie selbst die Lokalisierung in weitern Systembestandteilen vornimmt.

Auch die erste Speicher- und Transporteinrichtung 28, die in diesem Fall der weitere Systembestandteil ist, wird hinsichtlich ihrer Transportgeschwindigkeit von der Steuereinrichtung 38 über eine Steuerleitung 40 gesteuert. Wenigstens ein Belegungssensor 41 kann vorgesehen sein, um den Füllungsgrad dieser ersten Transporteinrichtung 28 bestimmen zu können. Weitere Sensoren können zur Lokalisierung von Teilmengen an Schlauchstücken in der ersten Transporteinrichtung 28 vorgesehen sein. In den Figuren 1 und 2 wird nur ein Ausschnitt dieser Speicher- und Transporteinrichtung 28 gezeigt

Nicht gezeigt ist, dass zwischen den Abwickeleinrichtungen 2, 3 und den Vorzugswalzen 12 noch zumindest eine Druckmaschine angeordnet sein kann, die abgewickelte Bahnen, in der Regel eine der Bahnen, bedruckt. Auch an oder in dieser Druckmaschine können Betriebsparameter bestimmt oder berechnet werden. Dazu können Sensoren vorhanden sein, die zum Beispiel den Füllstand der Druckfarbe in den Farbtanks überwachen. Betriebsparameter der Druckmaschine können über nicht gezeigte Datenleitungen der Steuereinrichtung übermittelt werden. Diese Betriebsparameter können dann zum Einstellen oder zum Vorschlagen von Fertigungsgeschwindigkeiten von Maschinen herangezogen werden.

Die Figur 2 zeigt eine Bodenlegemaschine 50, der über die erste Transporteinrichtung 28 Schlauchstückstapel 27 zugeführt werden.
Die erste Transporteinrichtung 28 kann aus verschiedenen Elementen bestehen. So können mehrere Transporteinrichtungen vorgesehen sein. Hiervon können einige zum vertikalen Transport oder zur Änderung der Ausrichtung der Schlauchstücke relativ zu ihrer Transportrichtung, dienen. Auch eine oder mehrere Lagerelemente können vorgesehen sein, in denen die Schlauchstücke gewisse Zeiten verweilen können. Ein solches Lagerelement ist beispielsweise in der EP 1 593 614 beschrieben.

Die Bodenlegemaschine 50 übernimmt die Schlauchstücke 25 so, dass ihre Ausrichtung, das heißt die Ausrichtung der Längsklebenaht, quer zur Transportrichtung ist. Hierbei ist jedoch zu beachten, dass es bereits vier Möglichkeiten gibt, die Längsklebenaht relativ zu der Bodenlegevorrichtung und damit relativ zumindest zu einem von der Bodenlegevorrichtung eingebrachten Ventil zu positionieren. So kann die Längsklebenaht nach oben oder nach unten zeigen. Da sie jedoch keineswegs immer in der Mitte einer Sackwandung angeordnet ist, kann sie näher oder weiter von dem vorauseilenden Rand des Schlauchstücks liegen. Aus diesen Möglichkeiten ergeben sich die genannten vier Ausrichtungsvarianten, die bei unterschiedlichen Aufträgen durchaus ausgeschöpft werden. Bei fortgeschrittenen Systemen zur Produktion von Säcken sollte die Ausrichtung automatisch vorgenommen werden. Ein vorteilhafter Platz für diese Ausrichtung - zu der auch eine Wendung von Teilmengen gehören kann - ist die erste Speicher- und Transportvorrichtung 28.

Bei der Übergabe der Schlauchstücke 25 von der Transportvorrichtung 28 an die Bodenlegemaschine 50 werden diese von einer Vereinzelungseinrichtung 51, die, wie in der Figur 2 angedeutet, als Rotationsanleger ausgeprägt sein kann, einzeln von dem Schlauchstückstapel entnommen. Eine Ausricht- und Transportvorrichtung 52 transportiert die Schlauchstücke 25 weiter und sorgt gleichzeitig für eine gute Ausrichtung der Lage der Schlauchstücke 25 in ihrer Transportebene.

Ein Doppelbandförderer 53 übernimmt die einzelnen Schlauchstücke 25 und befördert diese zu den einzelnen Bearbeitungsstationen, die in bekannter Weise an einem oder beiden Enden der Schlauchstücke 25 Böden anformen. Diese Bearbeitungsstationen enthalten in der Regel Funktionskomponenten, die arbeiten an den Säcken verrichten. Ein Teil dieser Funktionskomponenten muss bei Auftragswechseln auf gegebenenfalls neue Formate umgestellt werden. Mit Hilfe von Aktoren kann zumindest ein Teil dieser Funktionskomponenten ohne manuelle Eingriffe umgestellt werden. Zu diesem Zweck können diese Aktoren von Steuervorrichtungen zur Umstellung angesteuert werden. Der Zeitpunkt der Ansteuerung kann in Abhängigkeit von den beschriebenen Lokalisierungen stehen. Dies kann auch für andere Bestandteile des Systems gelten.
In der Bodenlegemaschine 50 werden in einem ersten Schritt die Enden aufgezogen, so dass offene Bodenrechtecke unter Ausbildung von seitlichen Dreieckstaschen entstehen. Anschließend kann ein Ventilzettel 54 aufgeklebt werden. Dazu wird der Ventilzettel und/oder Bereiche des Schlauchstücks 25 mit Klebstoff aus einem so genannten Leimauftragswerk versehen. Die Ventilzettel 54 bestehen in der Regel aus Papier und entstehen durch Abschneiden einzelner Zettel von der Materialbahn 55, die als Materialbahnrolle 56 zur Verfügung gestellt wird. Analog zu den Materialbahnrollen 4 und 5 in der Schlauchmaschine 1 können an dieser Stelle Sensoren 57 und/oder Drehgeber 58 vorgesehen sein, die über Datenleitungen 59 mit der Steuereinheit 38 verbunden sind, um letztendlich den Zeitpunkt eines bevorstehenden Rollenwechsels im Voraus bestimmen zu können. Auch Komponenten des Leimauftragswerks, wie etwa ein Leimvorratsbehälter, können auch mit Sensoren ausgestattet sein. Die Steuereinheit 38 steuert über eine Steuerleitung 60 unter anderem die Umfangsgeschwindigkeit des Antriebsrads 61 des Doppelbandförderers 53 und damit die Fertigungsgeschwindigkeit der Bodenlegemaschine 50. Auch die Vorzugsgeschwindigkeit der Materialbahn 55 wird auf eine solche, allerdings nicht dargestellte Art und Weise gesteuert.

Nach dem Aufkleben des Ventilzettels 54 wird der Boden zugelegt und gegebenenfalls verklebt. Schließlich kann noch ein Bodendeckblatt 62 zur Verstärkung des fertigen Bodens aufgeklebt werden. Die Bodendeckblätter 62 werden dazu von einer Materialbahn 63, die von einer Materialbahnrolle 64 zur Verfügung gestellt wird, vereinzelt. Wie im Fall der Ventilzettel 54 sind auch hier entsprechende Sensoren, Drehgeber, Datenleitungen und/oder Steuerleitungen vorgesehen, was aber der Einfachheit halber nicht gezeigt wird.

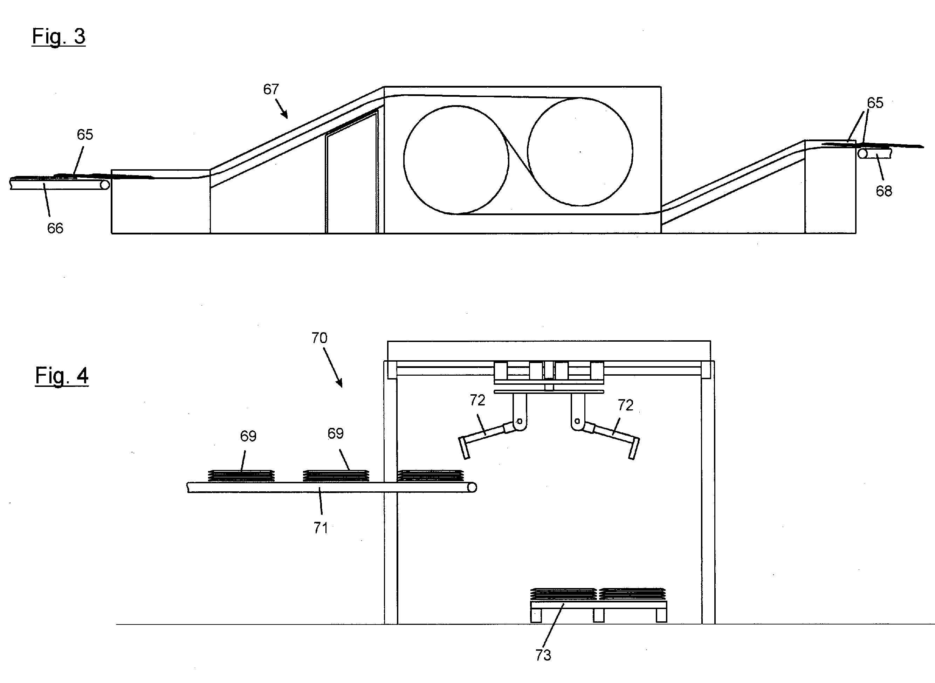

Die so aus Schlauchstücken 25 gefertigten Säcke 65 werden von einer zweiten Speicher- und Transporteinrichtung 66 übernommen und abtransportiert. Oft werden die Säcke 65 dazu in Schuppen (siehe Figur 3) angeordnet.

Die Schuppen werden, wie in der Figur 3 zu erkennen ist, von der zweiten Speicher- und Transporteinrichtung an eine so genannte Ablageeinrichtung 67 übergeben. Diese Ablageeinrichtung 67 transportiert die Säcke 65 über bestimmte Wege und nimmt dabei eine Verpressung der frisch hergestellten Böden vor, um für eine dauerhaft starke Verklebung zu sorgen. Die Transportstrecke in der Ablageeinrichtung ist verhältnismäßig lang, um ein ausreichendes Abtrocknen der Verklebung zu ermöglichen. Auch die Ablageeinrichtung 67 ist in dem dargestellten Fall ein Bestandteil des Systems und eine Lokalisierung von Teilmengen in der Ablageeinrichtung 67 kann vorteilhaft sein. Die zweite Speicher- und Transporteinrichtung 66 kann wiederum in mehrere Transport- und/oder Lagereinrichtungen untergliedert sein. Nach dem Durchlaufen der Ablageeinrichtung 67 gelangen die Säcke 65 auf eine dritte Transporteinrichtung 68, welche die Säcke 65 zu einer nicht gezeigten Schuppenzähl- und Trenneinrichtung transportiert. Diese trennt die Schuppen und ordnet die Säcke 65 zu Sackstapeln 69 mit einer bestimmten Anzahl an Säcken 65 an. Eine solche Schuppenzähl- und Trennstation ist beispielsweise in der DE 10 2004 055 325 B4 gezeigt und erläutert. Der Schuppenzähl- und Trennstation folgen oft noch eine oder mehrere weitere Transport- und/oder Lagereinrichtungen, beispielsweise solche, wie sie für den Bereich zwischen der Schlauchmaschine 1 und der Bodenlegemaschine 50 beschrieben wurden. In dem Bereich hinter der Schuppenzähl- und Trennstation werden oft stichprobenartig einzelne Säcke oder Sackstapel entnommen ("ausgeschleust"), einer Qualitätskontrolle unterzogen und anschließend wieder in die Transportkette eingefügt ("eingeschleust"). Auch die Zeit der Kontrolle kann als Lagerung angesehen werden. Es ist vorteilhaft, wenn einer Steuervorrichtung Einschleusungs- und Ausschleusungsvorgänge auch an anderen Stellen des Systems gemeldet werden und diese diese Vorgänge bei Lokalisierungen berücksichtigt.

Die Figur 4 zeigt eine Palettiermaschine 70 als ein Ausführungsbeispiel einer Vorrichtung, mit welcher eine Vielzahl von Säcken zu einem transportierbaren Sackverbund angeordnet werden können. Eine andere solche Vorrichtung ist etwa eine Einrichtung, in der geschuppt angeordnete Säcke unter Zuhilfenahme von Bändern oder Streifen zu Rollen aufgewickelt werden.

Neben der Palettiermaschine 70 ist in Figur 4 eine vierte Speicher- und Transporteinrichtung 71 gezeigt, die die Sackstapel 69 in den Bewegungsbereich einer Greifeinrichtung 72 bringt. Die Greifeinrichtung 72 ergreift jeweils einen Sackstapel 69 und ordnet ihn auf einer Palette 73 an. Auch in der Palettiermaschine können Sensoren vorgesehen sein, die beispielsweise die aktuelle Belegung der Palette 72 überwachen. Die Sensoren sind über nicht gezeigte Datenleitungen mit der Steuereinheit 38 verbunden. Die Steuereinheit 38 kann unter Berücksichtigung von Betriebsparametern und Fertigungsgeschwindigkeiten anderer Maschinen die Palettiergeschwindigkeit der Palettiermaschine vorschlagen und/oder einstellen.

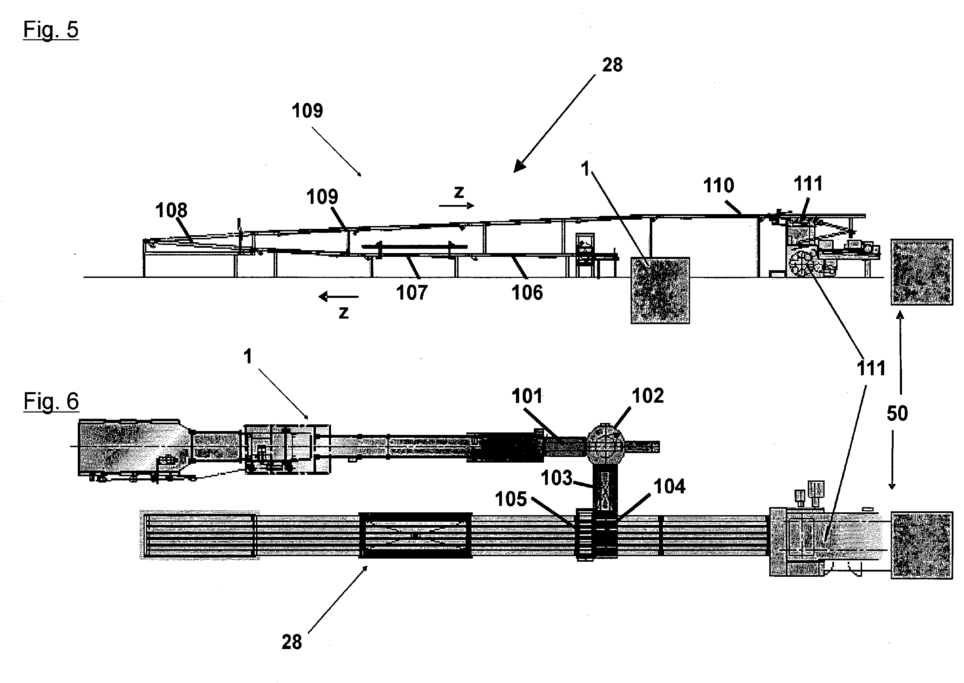

Die Figuren 5 und 6 befassen sich mit der Darstellung einer ersten Speicher-und Transportvorrichtung 28 nach dem Stand der Technik. Dieser in Figur 5 in der Seitenansicht dargestellten Vorrichtung werden nicht dargestellte Schlauchpakete von der Schlauchmaschine 1, die in Figur 5 lediglich als Rechteck dargestellt ist, zugeführt.
In Figur 6, die eine Draufsicht auf die Schlauchmaschine 1 und die erste Speicher- und Transportvorrichtung 28 darstellt, ist zu sehen, dass die Schlauchpakete in dem gezeigten Ausführungsbeispiel nach dem Verlassen der Schlauchmaschine zunächst über das Transportband 101, die Drehstation 102 und das Transportband 103 laufen. Durch das Eckrollenband 105 erfolgt eine erste Ausrichtung der Pakete. Die Wendestation 105 kann die Schlauchpakte wenden, um die Ausrichtung der Schlauchnaht zum späteren Sackventil auftragsgemäß festzulegen. Das Sammelband 106 läuft bei der Aufnahme der Schlauchstückstapel intermittierend, wobei die Schrittlänge an die Abmaße der Schlauchstücke in der Transportrichtung z derselben angepasst ist. Auf diese Weise geling es mit Verfahren des Standes der Technik, zunächst das Sammelband adäquat zu füllen. Nach dem Füllen des Sammelbandes gibt dieses seine ganze Ladung im Rahmen eines Transportzyklus an das folgende Speicherband 107 ab. Das heißt, dass das Sammelband im Rahmen dieser Übergabe in etwa um seine Ausdehnung in Transportrichtung z der Teilmengen bewegt wird.
Falls die folgende Speicherstrecke leer ist, wird die Gruppe an Schlauchstückstapeln, die das Sammelband befüllt haben, auf diese Weise (Abgabe aller Schlauchsstückstapel eines Speicherbandes - also der Gruppe an Schlauchstückstapeln - an das nächste Band) im Rahmen eines kontinuierlichen Förderzyklus) dann durch die ganze Speicherstrecke 109 hindurch gefördert, bis sie das Sammelband 110 erreicht und zunächst vollständig befüllt. Dieses Sammelband läuft bei der Abgabe der Schlauchstückstapel an den Rotationsanleger 111 wieder intermittierend, wobei die Länge der Schritte wieder an die Länge der einzelnen Schlauchstückstapel angepasst ist.

Auf diese Weise können wieder einzelne Schlauchstückstapel an den Rotationsanleger 111 übergeben werden. Zu erwähnen bleibt noch, dass in dem vorliegenden Ausführungsbeispiel das erste Speicherband mit einer Pressplatte ausgestattet ist. Das Pressen der Schlauchstücke mit der Pressplatte festigt die Schlauchnaht.

In dem gezeigten Ausführungsbeispiel einer ersten Lager- und Transportvorrichtung ändert sich die Transportrichtung z durch die gefaltete Anordnung der Bänder 106, 107, 108, 110, was bei solchen Vorrichtungen des Öfteren vorkommt, da sich auf diese Weise der Platz in den Maschinenhallen besser für Lagerzwecke ausnützen lässt.

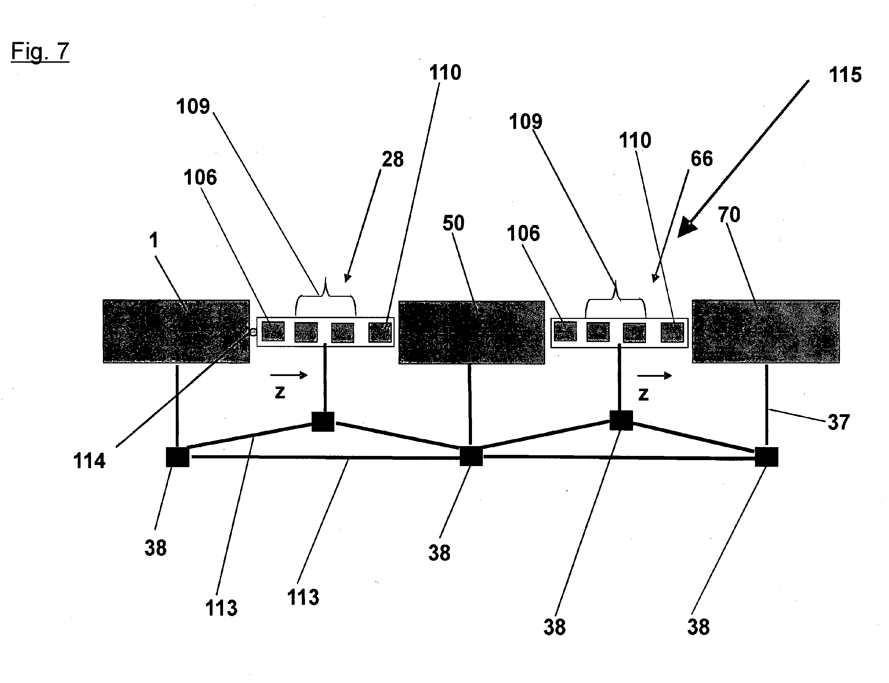

In Figur 7 ist ein Schema eines Systems zur Herstellung von Säcken gezeigt. In der Schlauchmaschine 1 werden Schlauchstapel hergestellt, die der ersten Speicher- und Transportvorrichtung 28 am Übergabepunkt 114 übergeben werden. In Vorrichtungen des Standes der Technik geschieht dies, indem das Sammelband 106 in intermittierendem Betrieb voll gefahren wird. Ist das Sammelband 106 gefüllt, gibt es seine gesamte Ladung, also eine Gruppe von Schlauchstückstapeln, an das nachfolgende Speicherband 107 ab. Dieses Speicherband ist das erste seiner Art in einer ganzen Abfolge solcher Bänder 107, 108, die auch Speicherstrecke 109 genannt werden. Am Ende der ersten Speicher- und Transportvorrichtung 28 steht wieder ein Abrufband 110, das von dem vorgelagerten Speicherband 108 en bloc beschickt wird, aber die Schlauchstückstapel sukzessive an den nicht gezeigten Rotationsanleger 111 des Bodenlegers 50 abgibt. Bei der Übergabe der von dem Bodenleger 50 gefertigten Sackstapel an die zweite dargestellte Speicher- und Transportvorrichtung 66 sowie bei der Übergabe der Sackstapel 69 von der zweite dargestellten Speicher- und Transportvorrichtung 66 an die Palettiermaschine 70 wiederholen sich die geschilderten Vorgänge sinngemäß. In dem dargestellten Ausführungsbeispiel eines Systems verfügen alle Bestandteile 1, 28, 50, 66, 70 des Systems 115 über jeweils eine Steuervorrichtung 38. Diese intelligenten Vorrichtungen 38 sind über Interfaces mit zumindest einer anderen Steuervorrichtung 38 des Systems 115 vernetzt. Die ihnen jeweils zugeordneten Bestandteile 1, 28, 50, 66, 70 des Systems 115 steuern die Steuervorrichtungen 38 über Steuerleitungen 37.

Andere Ausführungsbeispiele des Systems 115 können auch mit einer geringeren Anzahl an Steuervorrichtungen 38 auskommen. Allgemein dürfte es vorteilhaft sein, wenn eine Steuervorrichtung systemübergeordnete Steuerbefehle gibt.
Die in den Figuren Systeme 115 wurden vorstehend anhand ihrer Funktion als Systeme des Standes Technik beschrieben. Wie bereits erwähnt ist es unter anderem Gegenstand der Erfindung, das als Sammelband 106 bezeichnete erste Band der Speicher- und Transportvorrichtungen 28, 66 zumindest zeitweise eben nicht als Sammelband zu betreiben. Die Funktion, zumindest zwei Stapel 27, 69 zu sammeln, kann dann von einem der nachfolgenden Bänder 106, 107, 108, 110 wahrgenommen werden. Es wurden bereits Ausführungsbeispiele erläutert, in denen das Abrufband auch diese Funktion wahrnimmt. Je nach Füllstand der Speicherstrecke 109 kann diese Funktion auch von anderen Bändern wahrgenommen werden. Weitere Ausführungsbeispiele sind in der einleitenden Beschreibung und den Unteransprüchen aufgeführt.

| **Bezugszeichenliste** | |
|---|---|
| 1 | Schlauchmaschine |
| 2 | Abwickeleinrichtung |
| 3 | Abwickeleinrichtung |
| 4 | Materialrolle |
| 5 | Materialrolle |
| 6 | Bahn |
| 7 | Bahn |
| 8 | Gestell |
| 9 | Gestell |
| 10 | Bahn |
| 11 | Bahn |
| 12 | Vorzugswalze |
| 13 | Leitwalze |
| 14 | Gegendruckwalze |
| 15 | Nadelwalze |
| 16 | Messerwalze |
| 17 | Gegendruckwalze |
| 18 | Ständer |
| 19 | Klebstoffauftragswalze |
| 20 | Umlenkrollen |
| 21 | Klebstoffauftragswalze |
| 22 | Schlauchbildungsstation |
| 23 | Schlauch |
| 24 | Abreißwerk |
| 25 | Schlauchstück |
| 26 | Stapelstation |
| 27 | Schlauchstückstapel |
| 28 | erste Speicher- und Transporteinrichtung |
| 29 | Umlenkwalze |
| 30 | Drehgeber |
| 31 | Sensor |
| 32 | Sensor |
| 33 | Drehgeber |
| 34 | Drehgeber |
| 35 | Wickelhülse |
| 36 | Sensor |
| 37 | Datenleitung |
| 38 | Steuereinheit |
| 39 | Steuerleitung |
| 40 | Steuerleitung |
| 41 | Belegungssensor |
| 42 | |
| 43 | |
| 44 | |
| 45 | |
| 46 | |
| 47 | |
| 48 | |
| 49 | |
| 50 | Bodenlegemaschine |
| 51 | Vereinzelungseinrichtung |
| 52 | Ausricht- und Transportvorrichtung |
| 53 | Doppelbandförderer |
| 54 | Ventilzettel |
| 55 | Materialbahn |
| 56 | Materialbahnrolle |
| 57 | Sensor |
| 58 | Drehgeber |
| 59 | Datenleitung |
| 60 | Steuerleitung |
| 61 | Antriebsrad |
| 62 | Bodendeckblatt |
| 63 | Materialbahn |
| 64 | Materialbahnrolle |
| 65 | Sack |
| 66 | zweite Speicher- und Transporteinrichtung |
| 67 | Ablageeinrichtung |
| 68 | dritte Speicher- und Transporteinrichtung |
| 69 | Sackstapel |
| 70 | Palettiermaschine |
| 71 | vierte Speicher- und Transporteinrichtung |
| 72 | Greifeinrichtung |
| 73 | Palette |
| 74 | Rotationsanleger |
| | |
| 100 | |
| 101 | Transportband |
| 102 | Drehstation |
| 103 | Transportband |
| 104 | Eckrollenband mit Schieber |
| 105 | Wendestation |
| 106 | Sammelband |
| 107 | Speicherband mit Pressplatte |
| 108 | Speicherband schwenkbar |
| 109 | Speicherstrecke |
| 110 | Abrufband |
| 111 | Zubringer/Rotationsanleger |
| 112 | |
| 113 | Interfaces |
| 114 | Übergabepunkt zwischen Schlauchmaschine und erster Speicher- und Transportvorrichtung |
| 115 | System zur Herstellung von Säcken |
| 116 | |
| z | Pfeil in Transportrichtung der Teilmengen |

## Patentansprüche

1. Verfahren zur Herstellung von Säcken (65), bei welchem Stapel (27, 69) von Säcken (65) oder Sackhalbzeugen (23, 25) von einer ersten Maschine (20, 50, 70) zu einer zweiten Maschine (20, 50, 70) transportiert werden,
- bei welchem Stapel (27, 69) von Säcken (65) oder Sackhalbzeugen (23, 25) über eine Mehrzahl von Bändern (106, 107, 108, 110) geführt werden, die einer Speicher- und Transportvorrichtung (28, 66) zugeordnet sind
- und bei welchem ein Teil der Bänder (106, 107, 108, 110) dieser Speicher- und Transportvorrichtung (28, 66) als Sammel- oder Abgabebänder (106, 107, 108, 110) zum sukzessiven Sammeln oder zum sukzessiven Abgeben von Stapeln (27, 69) eingesetzt wird, indem die betreffenden Bänder (106, 107, 108, 110) intermittierend um Streckenabschnitte bewegt werden, die der Ausdehnung einzelner Stapel (27, 66) in der Förderichtung (z) angepasst sind bis das Sammel- oder Abgabeband (106, 107, 108, 110) gefüllt oder entleert ist,
- und bei welchem zumindest eines der Bänder (107, 108, 110), die dem ersten Band (106), das der ersten Maschine folgt, nachgelagert sind, zumindest zwei Stapel (27, 66) sammelt,
**dadurch gekennzeichnet,**
- **dass** das erste Band (106) zumindest zeitweise nicht als Sammelband (106) verwendet wird.

2. Verfahren nach Anspruch 1,
**dadurch gekennzeichnet, dass**
ein anderer Teil der Bänder (106, 107, 108, 110), als Speicher- oder Transportband eingesetzt wird, wobei diese Bänder (106, 107, 108, 110) eine Anzahl von Stapeln (27, 66) en bloc aufnehmen oder transportieren, indem das entsprechende Band (106, 107, 108, 110) zumindest um einen Streckenabschnitt bewegt wird, der der die der Ausdehnung der Anzahl von Stapeln in der Förderichtung (z) angepasst ist

3. Verfahren nach einem der vorstehenden Ansprüche,
**dadurch gekennzeichnet, dass**
das letzte Band (110), das der zweiten Maschine vorgelagert ist, zumindest zwei Stapel (27, 66) sammelt.

4. Verfahren nach einem der vorstehenden Ansprüche,
**dadurch gekennzeichnet, dass**
zumindest eines der Bänder (106, 107, 108, 110) zumindest einen Stapel (28, 66) während einer Zeitspanne rückwärts - also entgegen der normalen Transportrichtung (z) - transportiert.

5. Verfahren nach einem der vorstehenden Ansprüche,
**dadurch gekennzeichnet, dass**
- zumindest ein Band (106, 107, 108, 110) - vorzugsweise jedoch zwei Bänder (106, 107, 108, 110) - zumindest einmal während des Transportprozesses um einen Streckenbetrag bewegt wird, dessen Betrag zwischen einem ersten und zweiten Streckenbetrag liegt,
- wobei der erste Streckenbetrag der Ausdehnung einzelner Stapel (27, 66) in der Förderichtung (z) angepasst ist,
- und wobei der zweite Streckenbetrag der Ausdehnung der Anzahl von Stapeln (27, 66) in der Förderrichtung (z) angepasst ist.

6. Verfahren nach dem der vorstehenden Ansprüche,
**dadurch gekennzeichnet, dass**
- zumindest zwei aufeinander folgende Bänder (106, 107, 108, 110) eine Anzahl von Stapeln (27, 69) en bloc an ein benachbartes Band (106, 107, 108, 110) abgeben, die kleiner ist als die Anzahl von Stapeln (27, 69), die jeweils eins der betreffenden Bänder füllt,
- und dass diese Abgabe durchgeführt wird, während Stapel (27, 69) über die Mehrzahl (106, 107, 108, 110) von Bändern geführt werden, die zu einem Auftrag gehören.

7. Verfahren nach einem der vorstehenden Ansprüche,
**dadurch gekennzeichnet, dass**
zu einem einzigen Zeitpunkt Stapel (27, 69) über die Mehrzahl von Bändern (106, 107, 108, 110) geführt werden, die der zumindest einen Speicher- und Transportvorrichtung (28, 66) zugeordnet sind, die zu zumindest zwei unterschiedlichen Aufträgen gehören.

8. Verfahren nach dem vorstehenden Anspruch,
**dadurch gekennzeichnet, dass**
zu einem einzigen Zeitpunkt Stapel (27, 69) auf zumindest einem der Bänder (106, 107, 108, 110) der Speicher- und Transportvorrichtung (28, 66) positioniert werden, die zu zumindest zwei unterschiedlichen Aufträgen gehören und deren Ausführung sich unterscheidet.

9. Verfahren nach einem der vorstehenden Ansprüche,
**dadurch gekennzeichnet, dass**
eine Steuervorrichtung (38) verwendet wird, die die Positionen der Stapel (27, 69) in der Speicher und Transportvorrichtung (28, 66) verfolgt.

10. Verfahren nach dem vorstehenden Anspruch,
**dadurch gekennzeichnet, dass**
die Positionen der Stapel (27, 69) in der Speicher- und Transportvorrichtung (28, 66) angezeigt werden.

11. Verfahren nach dem vorstehenden Anspruch,
**dadurch gekennzeichnet, dass**
Lücken, die in der Belegung der Speicher- und Transporteinrichtung (28, 66) entstehen, erkannt und durch eine geeignete Bewegung von Bändern (106, 107, 108, 110) der Speicher- und Transportvorrichtung (28, 66) geschlossen werden.

12. Verfahren nach dem vorstehenden Anspruch,
**dadurch gekennzeichnet, dass**
die zur Schließung der Lücken geeignete Bewegung von Bändern der Speicher- und Transportvorrichtung (28, 66) bei zumindest einem Band (106, 107, 108,
110) eine Strecke ausmacht, die geringer ist als die Strecke, um die ein volles Band (106, 107, 108, 110) bewegt werden muss, um alle seine Stapel (27, 29) en bloc aufzunehmen oder zu transportieren.

13. System (115) zur Herstellung von Säcken (65),
- welches (115) aus zumindest einer Maschine (1, 50, 70) und zumindest einer Speicher- und Transportvorrichtung (28, 66) für Stapel (27, 69) aus Säcken (65) oder Sackhalbzeugen (23, 25) besteht,
- und mit welchem (115) zumindest ein Bearbeitungsschritt an Säcken (65) oder Sackhalbzeugen (23, 25) ausführbar ist,
- wobei der Speicher- und Transportvorrichtung (28, 66) eine Mehrzahl von Bändern (106, 107, 108, 110) zugeordnet sind, die von Aktoren bewegt werden
- wobei ein Teil dieser Bänder (106, 107, 108, 110) von den ihnen zugeordneten Aktoren intermittierend um Streckenbeträge bewegbar ist, die der Länge eines Stapels (27, 69) in der Bewegungsrichtung (z) der Stapel (27, 69) angepasst ist,
und wobei eine Steuervorrichtung (38) vorgesehen ist, die mit den Aktoren der Bänder (106, 107, 108, 110) verbunden ist, und die Aktoren zumindest eines der Bänder (107, 108, 110), die dem ersten Band (106), das der ersten Maschine (1, 50, 70) folgt, sind, in der Transportrichtung der Stapel (z) nachgelagert sind, zumindest zweimal zu intermittierenden Bewegungen ansteuert,
- die der Länge eines Stapels (27, 69) in der Bewegungsrichtung (z) der Stapel (27, 69) angepasst sind
**dadurch gekennzeichnet,**
- **dass** die Steuervorrichtung (38) derart eingestellt ist,
- **dass** sie die Aktoren des ersten Bandes (106), zumindest teilweise zur direkten Weitergabe von Stapeln (27, 69) ansteuert,

14. System nach dem vorstehenden Anspruch,
**dadurch gekennzeichnet,**
- **dass** die Steuervorrichtung zur Durchführung zumindest eines ersten und eines zweiten Betriebsmodus eingerichtet ist,
- und **dass** die Steuervorrichtung im ersten Betriebsmodus dazu eingerichtet ist, die Aktoren des ersten Bandes und/oder die des zumindest einen nachgelagerten Bandes anders anzusteuern als in dem zweiten Betriebsmodus.

## Claims

1. Method for producing sacks (65), in which stacks (27, 69) of sacks (65) or semi-finished sack products (23, 25) are transported from a first machine (20, 50, 70) to a second machine (20, 50, 70),
- in which stacks (27, 69) of sacks (65) or semi-finished sack products(23, 25) are guided across a plurality of belts (106, 107, 108, 110) which are assigned to a storage and transportation device (28, 66), and
- in which part of the belts (106, 107, 108, 110) of this storage and transportation device (28, 66) are employed as collection or delivery belts (106, 107, 108, 110) for successively collecting and for successively delivering stacks (27, 69) in that the respective belts (106, 107, 108, 110) are moved in an intermittent manner by path portions which are adapted to the expansion of individual stacks (27, 66) in the conveying direction (z) until the collection or delivery belt (106, 107, 108, 110) is filled or emptied, and
- in which at least one of the belts (107, 108, 110) which is/are downstream of the first belt (106) which follows on from the first machine collects at least two stacks (27, 66),
**characterized**
- **in that** the first belt (106) at least temporarily is not used as a collection belt (106).

2. Method according to Claim 1,
**characterized in that**
another part of the belts (106, 107, 108, 110) is employed as a storage or transportation belt, wherein these belts (106, 107, 108, 110) receive or transport a number of stacks (27, 66) en bloc in that the respective belt (106, 107, 108, 110) is moved at least by a path portion which is adapted to the expansion of the number of stacks in the conveying direction (z).

3. Method according to one of the preceding claims,
**characterized in that**
the last belt (110) which is upstream of the second machine collects at least two stacks (27, 66).

4. Method according to one of the preceding claims,
**characterized in that**
at least one of the belts (106, 107, 108, 110) during a time span transports at least one stack (28, 66) in the reverse direction, that is to say counter to the normal transport direction (z).

5. Method according to one of the preceding claims,
**characterized in that**
- at least one belt (106, 107, 108, 110) - however, preferably two belts (106, 107, 108, 110) - at least once during the transport process is/are moved by an amount of distance, the amount thereof being between a first amount of distance and a second amount of distance,
- wherein the first amount of distance is adapted to the expansion of individual stacks (27, 66) in the conveying direction (z), and
- wherein the second amount of distance is adapted to the expansion of the number of stacks (27, 66) in the conveying direction (z).

6. Method according to one of the preceding claims,
**characterized in that**
- at least two successive belts (106, 107, 108, 110) dispense a number of stacks (27, 69) en bloc to an adjacent belt (106, 107, 108, 110), said number being smaller than the number of stacks (27, 69) which in each case fills one of the respective belts, and
- **in that** this dispensing is carried out while stacks (27, 69) are guided across the plurality (106, 107, 108, 110) of belts which are associated with one order.

7. Method according to one of the preceding claims,
**characterized in that**
at one single point in time stacks (27, 69) are guided across the plurality of belts (106, 107, 108, 110) which are assigned to the at least one storage and transportation device (28, 66) and which are associated with at least two different orders.

8. Method according to the preceding claim,
**characterized in that**
at one single point in time stacks (27, 69) are positioned on at least one of the belts (106, 107, 108, 110) of the storage and transportation device (28, 66) which are associated with at least two different orders and which differ in their execution.

9. Method according to one of the preceding claims,
**characterized in that**
a control device (38) which tracks the positions of the stacks (27, 69) in the storage and transportation device (28, 66) is used.

10. Method according to the preceding claim,
**characterized in that**
the positions of the stacks (27, 69) in the storage and transportation device (28, 66) are displayed.

11. Method according to the preceding claim,
**characterized in that**
gaps which are created while populating the storage and transportation device (28, 66) are identified and are closed by a suitable movement of belts (106, 107, 108, 110) of the storage and transportation device (28, 66).

12. Method according to the preceding claim,
**characterized in that**
the movement of belts of the storage and transportation device (28, 66) which is suitable for closing the gaps in the case of at least one belt (106, 107, 108, 110) is equal to a distance which is smaller than the distance by which a full belt (106, 107, 108, 110) has to be moved in order to receive or to transport all the stacks (27, 29) thereof en bloc.

13. System (115) for producing sacks (65),
- which (115) is composed of at least one machine (1, 50, 70) and at least one storage and transportation device (28, 66) for stacks (27, 69) of sacks (65) or semi-finished sack products (23, 25), and
- by way of which (115) at least one processing step on sacks (65) or semi-finished sack products (23, 25) is executable,
- wherein the storage and transportation device (28, 66) is assigned a plurality of belts (106, 107, 108, 110) which are moved by actuators,
- wherein part of these belts (106, 107, 108, 110) are intermittently movable by the actuators assigned thereto by amounts of distance which are adapted to the length of a stack (27, 69) in the movement direction (z) of the stacks (27, 69), and
- wherein a control device (38) which is connected to the actuators of the belts (106, 107, 108, 110) is provided, and the actuators of at least one of the belts (107, 108, 110) which are downstream of the first belt (106) which follows on from the first machine (1, 50, 70) in the transport direction of the stacks (z) are activated at least twice for intermittent movements which are adapted to the length of a stack (27, 69) in the movement direction (z) of the stacks (27, 69),
**characterized in that** the control device (38) is adjusted in such a manner that the actuators of the first belt (106) are activated by said control device at least in part in order to directly transfer stacks (27, 69).

14. System according to the preceding claim,
**characterized**
- **in that** the control device is conceived for performing at least a first and a second operating mode, and
- **in that** the control device in the first operating mode is conceived for activating the actuators of the first belt and/or the actuators of the at least one downstream belt in a manner which is different from the second operating mode.

## Revendications

1. Procédé de fabrication de sacs (65), dans lequel des piles (27, 69) de sacs (65) ou de produits semi-finis de sacs (23, 25) sont transportées d'une première machine (20, 50, 70) à une deuxième machine (20, 50, 70) ;
- dans lequel les piles (27, 69) de sacs (65) ou de produits semi-finis de sacs (23, 25) sont guidées sur une pluralité de tapis (106, 107, 108, 110) associés à un dispositif de stockage et de transport (28, 66) ;
- et dans lequel une partie des tapis (106, 107, 108, 110) de ce dispositif de stockage et de transport (28, 66) prennent la forme de tapis de collecte ou de remise (106, 107, 108, 110) pour la collecte successive ou pour la remise successive de piles (27, 69), les tapis (106, 107, 108, 110) en question étant déplacés de façon intermittente sur des sections de tronçon adaptées à la taille des piles (27, 66) individuelles dans la direction de transport (z) jusqu'à ce que le tapis de collecte ou de remise (106, 107, 108, 110) soit rempli ou vidé,
- et dans lequel au moins un des tapis (107, 108, 110) placés en aval du premier tapis (106) suivant la première machine collecte au moins deux piles (27, 66), **caractérisé en ce que**
- le premier tapis (106) ne sert de temps en temps pas de tapis de collecte (106).

2. Procédé selon la revendication 1, **caractérisé en ce qu'**une autre partie des tapis (106, 107, 108, 110) sert de tapis de stockage ou de transport, ces tapis (106, 107, 108, 110) recevant ou transportant en bloc un nombre de piles (27, 66) et le tapis (106, 107, 108, 110) correspondant étant pour ce faire au moins déplacé autour d'une section de tronçon adaptée à la taille du nombre de piles dans la direction de transport (z).

3. Procédé selon l'une quelconque des revendications précédentes, **caractérisé en ce que** le dernier tapis (110) disposé en amont de la deuxième machine collecte au moins deux piles (27, 66).

4. Procédé selon l'une quelconque des revendications précédentes, **caractérisé en ce qu'**au moins un des tapis (106, 107, 108, 110) transporte au moins une pile (28, 66) pendant une période de marche arrière - donc dans le sens contraire de la direction de transport (z).

5. Procédé selon l'une quelconque des revendications précédentes, **caractérisé en ce que** :
- au moins un tapis (106, 107, 108, 110) - de préférence toutefois deux tapis (106, 107, 108, 110) - est déplacé au moins une fois pendant le processus de transport sur une quantité de tronçon se situant entre une première et une deuxième quantité de tronçon ;
- la première quantité de tronçon étant adaptée à la taille des piles (27, 66) individuelles dans la direction de transport (z) ;
- et la deuxième quantité de tronçon étant adaptée à la taille du nombre de piles (27, 66) dans la direction de transport (z).

6. Procédé selon l'une quelconque des revendications précédentes, **caractérisé en ce que** :
- au moins deux tapis (106, 107, 108, 110) successifs remettent en bloc un nombre de piles (27, 69) à un tapis (106, 107, 108, 110) connexe, ledit nombre étant inférieur au nombre de piles (27, 69) remplissant respectivement un des tapis concernés ;
- et que cette remise est effectuée pendant que les piles (27, 69) sont guidées sur la pluralité (106, 107, 108, 110) de tapis appartenant à une commande donnée.

7. Procédé selon l'une quelconque des revendications précédentes, **caractérisé en ce que** les piles (27, 69) guidées à un moment unique sur la pluralité de tapis (106, 107, 108, 110) et associées à au moins un dispositif de stockage et de transport (28, 66) appartiennent à au moins deux commandes différentes.

8. Procédé selon la revendication précédente, **caractérisé en ce que** les piles (27, 69) positionnées à un moment unique sur au moins un des tapis (106, 107, 108, 110) du dispositif de stockage et de transport (28, 66) appartiennent à au moins deux commandes différentes et que celles-ci sont de types différents.

9. Procédé selon l'une quelconque des revendications précédentes, **caractérisé en ce qu'**un dispositif de commande (38) est utilisé, celui-ci suivant les positions des piles (27, 69) dans le dispositif de stockage et de transport (28, 66).

10. Procédé selon la revendication précédente, **caractérisé en ce que** les positions des piles (27, 69) sont affichées dans le dispositif de stockage et de transport (28 ; 66).

11. Procédé selon la revendication précédente, **caractérisé en ce que** les interstices se produisant dans l'occupation du dispositif de stockage et de transport (28, 66) sont détectés et fermés par un mouvement adapté des tapis (106, 107, 108, 110) du dispositif de stockage et de transport (28, 66).

12. Procédé selon la revendication précédente, **caractérisé en ce que** le mouvement des tapis du dispositif de stockage et de transport (28, 66) adapté à la fermeture des interstices constitue, pour au moins un tapis (106, 107, 108, 110), un tronçon inférieur au tronçon sur lequel un tapis (106, 107, 108, 110) entier doit être déplacé pour recevoir ou transporter toutes ses piles (27, 29) en bloc.

13. Système (115) de fabrication de sacs (65) :
- ledit système (115) se composant d'au moins une machine (1, 50, 70) et d'au moins un dispositif de stockage et de transport (28, 66) pour les piles (27, 69) de sacs (65) ou de produits semi-finis de sacs (23, 25) ;
- et ledit système (115) permettant d'effectuer au moins une étape de traitement des sacs (65) ou des produits semi-finis de sacs (23, 25) ;
- une pluralité de tapis (106, 107, 108, 110) étant associée au dispositif de stockage et de transport (28, 66), ladite pluralité pouvant être déplacée par des actionneurs ;
- une partie de ces tapis (106, 107, 108, 110) pouvant être déplacée par les actionneurs leur étant associés de façon intermittente de quantités de tronçon adaptées à la longueur d'une pile (27, 69) dans la direction de déplacement (z) des piles (27, 69) ; et
- un dispositif de commande (38) étant prévu, ledit dispositif étant relié aux actionneurs des tapis (106, 107, 108, 110) et les actionneurs d'au moins un des tapis (107, 108, 110) placés en aval du premier tapis (106) suivant la première machine (1, 50, 70), dans la direction de transport des piles (z), commandant au moins deux fois avec des mouvements intermittents qui sont adaptés à la longueur d'une pile (27, 69) dans la direction de déplacement (z) des piles (27, 69) ;
**caractérisé en ce que** le dispositif de commande (38) est réglé de telle sorte qu'il commande les actionneurs du premier tapis (106) au moins en partie pour rendre directement les piles (27, 69).

14. Système selon la revendication précédente, **caractérisé en ce que** :
- le dispositif de commande est conçu pour mettre en oeuvre au moins un premier et un deuxième mode de fonctionnement ;
- et que le dispositif de commande est conçu, dans le premier mode de fonctionnement, pour commander les actionneurs du premier tapis et/ou pour commander autrement les actionneurs d'au moins un tapis placé en aval que dans le deuxième mode de fonctionnement.
